# EUROPÄISCHE PATENTSCHRIFT

(11) **EP 0 804 895 B1**
(45) Veröffentlichungstag und Bekanntmachung des Hinweises auf die Patenterteilung: **13.11.2002**
(21) Anmeldenummer: 97102927.7
(22) Anmeldetag: 22.02.1997
(51) Int. Cl.: A47J 43/08, A47J 43/07

(54) **Träger für ein Arbeitssystem eines elektrisch angetriebenen Haushaltsgerätes**
Support for a functional unit of an electrically driven household appliance
Support pour une unité de travail pour une machine domestique électrique

(30) Priorität: 29.04.1996 DE 19617139
(43) Veröffentlichungstag der Anmeldung: 05.11.1997
(73) Patentinhaber: Braun GmbH, Kronberg (DE)
(72) Erfinder: Börger, Georg, 61449 Steinbach (DE); Kamprath, Karl-Heinz, 65207 Wiesbaden (DE); Pfeiffer, Bernd, 61118 Bad Vilbel (DE); Schad, Jürgen, 65474 Bischofsheim (DE); Eimecke, Rolf, 63179 Obertshausen (DE)

(56) Entgegenhaltungen:
- EP-A- 0 549 818
- EP-A- 0 570 685
- DE-A- 3 126 956
- FR-A- 2 345 974
- GB-A- 2 039 226

## Beschreibung

Die vorliegende Erfindung bezieht sich auf einen Träger für ein Antriebssystem eines elektrisch angetriebenen Haushaltsgeräts nach dem Oberbegriff des Anspruchs 1.

Elektrisch angetriebene Haushaltsgeräte, insbesondere Küchenmaschinen, müssen einen stabilen Träger aufweisen, um zum einen eine gute Standfestigkeit des Geräts auf einer Unterlage zu gewährleisten und um andererseits das Antriebssystem, wie einen Elektromotor als Antrieb und eine oder mehrere Wellen als Abtriebe, zu lagern. Eine solche elektrische Küchenmaschine ist beispielsweise aus der DE-31 26 956 C2 bekannt. Dieses Gerät, bei dem es sich um ein Zerkleinerungsgerät bzw. einen Schnitzler, das auch zum Rühren geeignet ist, handelt, weist eine Bodenplatte mit einem seitlich umlaufenden Rand auf, an den sich nach oben ein Gehäuse-Hauptkörper anschließt. Im Bereich der Trennebene zwischen der Bodenplatte und dem Gehäuse-Hauptkörper ist ein plattenförmiger Träger ausgebildet, der auf seiner Oberseite einen elektrischen Antriebsmotor mit einer Welle trägt, die sich durch den Träger hindurch zu dessen Unterseite erstreckt. Seitlich neben dem Antriebsmotor ist auf dem Träger eine über ein Getriebe mit der Welle verbundene Antriebsspindel ausgebildet, die in Lagern drehbar geführt ist und die in einen Arbeitsbehälter hineinragt und dort zum Zerkleinern und Rühren von Nahrungsmitteln ein Rühr- oder Zerkleinerungswerkzeug trägt. Die Lager sind wiederum in einer auf die Oberseite des Trägers als gesondertes Bauteil aufgesetzten, gemeinsamen Lagerhülse gehalten. Die Antriebsspindel steht, wie die Wellen, ebenfalls an der Unterseite des Trägers hervor.

Sowohl die Antriebsspindel für das Werkzeug wie die Welle des Antriebsmotors tragen zur Bildung des Getriebes jeweils eine Riemenscheibe, über die ein gemeinsamer Antriebsriemen geführt ist, um die Antriebskraft von dem Antriebsmotor auf die Antriebsspindel zu übertragen. Bei dem Träger, der die einzelnen Teile trägt, handelt es sich um eine dünne, ebene Metallplatte aus Blech, die bei Betrieb des Geräts Kräfte und Schwingungen aufnehmen muß und dies insbesondere in den Lagerhülsen. Hierzu ist die die Lagerhülse tragende Spindel als gesondertes Bauteil auf der Grundplatte aufgesetzt, um so eine ausreichende Lagerlänge zum Aufnehmen der Lagerkräfte zu erreichen.

Ein Träger nach dem Oberbegriff des Anspruchs 1 ist aus EP-A-570685 bekannt.

Ausgehend von dem vorstehend beschriebenen Stand der Technik liegt der vorliegenden Erfindung die Aufgabe zugrunde, einen Träger für das Antriebssystem eines elektrisch angetriebenen Haushaltsgeräts, insbesondere für eine Küchenmaschine, zu schaffen, der zum einen eine hohe Steifigkeit aufweist, zum anderen aus möglichst wenig Teilen besteht und darüber hinaus kostengünstig und mit geringem Gewicht herstellbar ist.

Diese Aufgabe wird, ausgehend von dem eingangs angegebenen Stand der Technik, durch die kennzeichnenden Merkmale des Anspruchs 1 gelöst. Ein solcher Träger nach der Erfindung zeichnet sich durch eine hohe Steifigkeit aus, die insbesondere durch die mehreren, sickenförmigen Versteifungsrippen an den Lagerhülsen erzielt werden. Denn gerade durch diese Versteifungsrippen kann ein einfacher Blechträger gewählt werden, an dem die Lagerhülsen einteilig im Träger integriert sind und auf eine gegenüber dem Stand der Technik weitaus längere Lagerlänge gebracht werden können, ohne daß die Lagerkräfte einen frühzeitigen Bruch verursachen. Da im Bereich der Lagerhülse sehr hohe Lagerkräfte auftreten, insbesondere an derjenigen Lagerhülse, die die Antriebsspindel für das Schneid- oder Rührwerkzeug trägt, verlaufen die Versteifungsrippen strahlenförmig zu der Achse der mindestens einen Lagerhülse und gehen in die Hülsenwand über und laufen darin aus. Durch diese strahlenförmige Anordnung der Versteifungsrippen können die auftretenden Querkräfte über die Versteifungsrippen in die Grundplatte schadlos eingeleitet werden. Der gesamte Träger kann somit aus dünnwandigerem Material hergestellt werden. Durch die Versteifungsrippen wird eine Verlängerung der Lagerhülsen möglich, was die Lagerlänge verbessert und somit die Stabilität der Lager erhöht.

Gemäß den Merkmalen des Anspruchs 2 können die Sicken am Außenumfang der Lagerhülse ausgebildet sein. Dies hat den Vorteil, daß zur Aufnahme einer Gleitlagerbuchse in der Lagerhülse, diese eine größtmögliche Aufnahmefläche für die Gleitlagerbuchse aufweist, die dann äußerst standfest in der Lagerhülse gehalten wird. Die Gleitlagerbuchse dient als Gleitlager für eine Antriebsspindel oder Welle.

Nach den Merkmalen des Anspruchs 3 dienen hierbei nur noch die Innenflächen der Versteifungsrippen als Lagerflächen für die einpreßbaren Lagerbuchsen, da diese Abschnitte nur noch nach innen an der Bohrung hervorstehen. Die Bohrungswandung selbst steht gegenüber den Versteifungsrippen nach hinten ab und dient nur noch zur Verbindung der Versteifungsrippen.

Durch die Merkmale des Anspruchs 4 wird der zylindrische Teil der Lagerhülse groß gehalten, um die Lagerbuchse möglichst fest in die Lagerhülse einzupressen. Eine durchgehende Versteifungsrippe (Anspruch 5) vermindert zwar den Trageanteil der Lagerbuchse, kann aber die Herstellung der Lagerhülsen vereinfachen, da die Rippen dann auch gezogen und kalibriert werden können.

Je nach Art der Welle oder Spindel, die in einer Lagerhülse an der Grundplatte über darin eingesetzte Lager gelagert werden soll, müssen die Lagerhülsen unterschiedliche Höhen in Achsrichtung der Welle oder Spindel bzw. des Lagers aufweisen. Um auch bei längeren, höher über die Grundplatte vorstehenden Lagerhülsen eine ausreichende Steifigkeit gegen einwirkende Querkräfte auf die Hülsenwand zu gewährleisten, sollten gemäß Anspruch 6 die Versteifungsrippen nicht nur in die Wand der jeweiligen Lagerhülse übergehen, sondern sich auch eine gewisse Länge entlang der Hülsenwand der Lagerhülse erstrecken. Bevorzugt enden sie in einer Höhe über der Grundplatte, die etwa der doppelten Höhe der jeweiligen Rippe, d.h. der Querschnittshöhe der Rippe, entspricht. Es hat sich gezeigt, daß sich mit einer solchen Dimensionierung die Querkräfte ausreichend aufnehmen lassen.

Um die Steifigkeit der Lagerhülsen und des Trägers zu erhöhen, sind die Merkmale der Ansprüche 7 bis 11 vorgesehen. Insbesondere die Merkmale des Anspruchs 8 versteifen bei geringer Bauhöhe den Träger. Um einen Träger mit den erfindungsgemäßen Merkmalen einteilig aus Metall (Anspruch 8) zu bilden, sollten vorzugsweise verschiedene Verformungsschritte angewandt werden, um die Lagerhülsen und die Rippen zu formen. Um die Lagerhülsen einteilig aus einem dünnen Blech herauszuformen, werden zunächst die Lagerhülsen durch Walzverformung (Anspruch 10) gebildet, indem das Plattenmaterial so lange gewalzt wird, bis die entsprechende Lagerhülse gezogen ist. Hierbei kann der freie Rand der Lagerhülse sehr dünn ausgewalzt werden, um die entsprechende Länge der Lagerhülse, mit der diese über die Ebene der Grundplatte vorsteht, zu erzielen. Anschließend werden dann die Rippen durch Tiefziehen gemäß Anspruch 10 oder durch Einpressen gemäß Anspruch 11 an den vorgegebenen Stellen gebildet, die dann auch in die Wand der Lagerhülse übergehend und sich entlang dieser erstreckend geformt werden können.

Vorzugsweise wird bei einer Ausbildung des Trägers aus Metall eine Blechstärke von etwa 0,5 bis 1,5 mm verwendet, wobei etwa eine Stärke von 1 mm zu bevorzugen ist. Es wird verständlich werden, daß ein Träger mit den Versteifungsrippen auch aus Kunststoff mit oder ohne Gewebeverstärkung geformt werden könnte, allerdings ist ein Träger aus einem Metallblech (Anspruch 8) zu bevorzugen, da dadurch eine noch höhere Verwindungssteifigkeit des gesamten Trägers bei günstigstem Preis und einfacher Herstellung erzielt werden kann.

Die Höhe der Hülse selbst, mit der sie über die Ebene der Grundplatte vorsteht, sollte gemäß Anspruch 12 etwa dem 1- bis 2-fachen, vorzugsweise dem 1,5-fachen, des Hülsen-Innendurchmessers betragen. Es hat sich gezeigt, daß eine solche Höhe der Hülse ausreichend ist, um die entsprechenden Spindeln und Wellen, die in einem Küchengerät benötigt werden, zu halten und zu lagern, insbesondere auch dann, wenn der Träger aus Metall gebildet ist und die Lagerhülsen einteilig aus einem dünnen Metallblech gemäß Anspruch 9, einschließlich der Versteifungsrippen, herausgeformt werden.

Bevorzugt werden gemäß Anspruch 13 die Versteifungsrippen gleichmäßig an dem Umfang jeder Lagerhülse verteilt, wobei vorzugsweise drei Versteifungsrippen jeder Lagerhülse zugeordnet sind. Mit dieser Anordnung können die Kräfte gleichmäßig in verschiedenen Richtungen in die Hauptebene der Grundplatte schadlos eingeleitet werden.

Der vorstehend beschriebene Träger kann als einteiliges Bauteil alle Anforderungen, die sich insbesondere in einem Küchengerät stellen, erfüllen. Gerade auch dann, wenn mehrere Lagerstellen für zusätzliche Antriebswellen oder Spindeln vorgesehen werden müssen, wie dies beispielsweise bei Küchenmaschinen mit zwei Rühr- oder Zerkleinerungswerkzeugen, die unterschiedlichen Behältern zugeordnet sind, der Fall ist, können diese zusätzlichen Lagerstellen in Form von Lagerhülsen aus der Grundplatte herausgeformt werden, in die dann Gleithülsen für die Wellen eingepreßt werden. Um auch dann die erforderliche Steifigkeit beizubehalten, werden die Versteifungsrippen entsprechend über den Träger verteilt und zumindest Rippen, strahlenförmig von den jeweiligen Lagerhülsen ausgehend, aus dem Träger herausgeformt. Hierdurch ergibt sich ein kostengünstiges und montagefreundliches Teil, das trotz dünnwandiger Konstruktion eine hohe Biege- und Torsionssteifigkeit durch die Versteifungsrippen und gegebenenfalls durch den um die Grundplatte zumindest teilweise umlaufenden Rand aufweist.

Weitere Einzelheiten und Merkmale der Erfindung ergeben sich aus der nachfolgenden Beschreibung eines Ausführungsbeispiels anhand der Zeichnung. In der Zeichnung zeigt:
- Fig. 1: eine perspektivische Ansicht auf die Oberseite eines erfindungsgemäßen Trägers ohne Getriebeeinrichtung und Elektromotor,
- Fig. 2: einen Schnitt X-X durch die rechte Achse einer Lagerhülse und entlang einer Versteifungsrippe des Trägers, wie er in Fig. 1 dargestellt ist, allerdings mit eingepreßter Lagerbuchse und erster Antriebsspindel, und
- Fig. 3: eine perspektivische Ansicht von der Unterseite eines kompletten Trägers mit daran befestigtem Antriebsmotor, Antriebsritzel und Antriebsscheiben, die über einen Antriebsriemen miteinander verbunden sind.

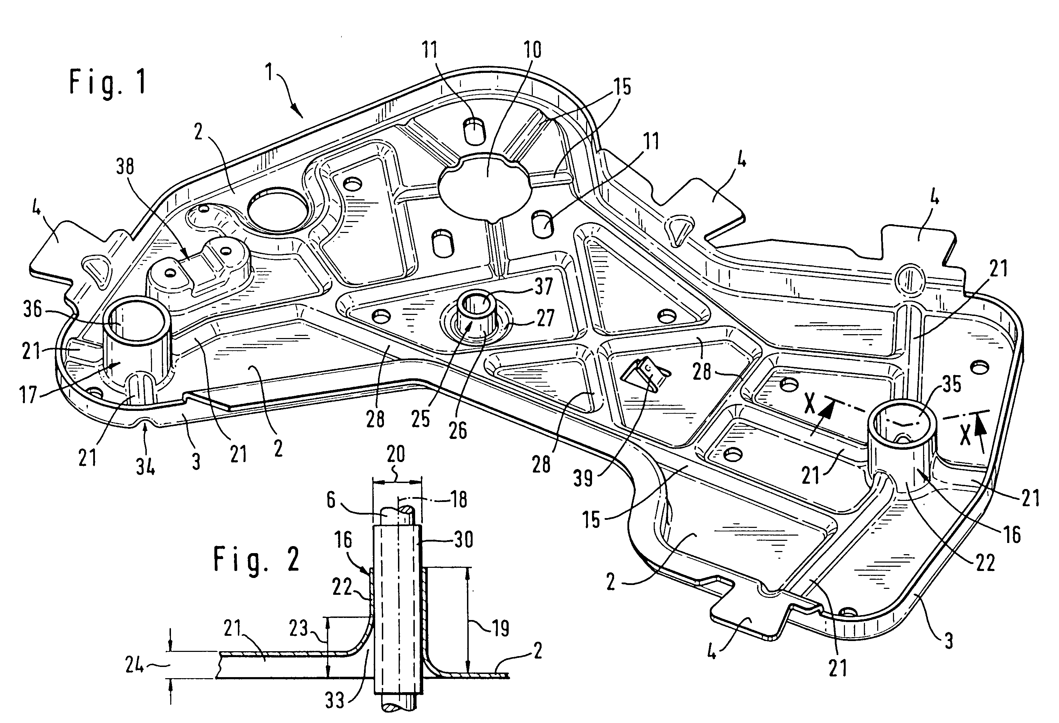

Der Träger 1, wie ihn die Fig. 1 von seiner Oberseite zeigt, weist eine Grundplatte 2 auf, die mit ihren flachen Flächenelementen in einer Ebene verläuft. Umlaufend an der Grundplatte 2 ist ein geringfügig über deren Ebene vorstehender Rand 3, der etwa senkrecht zu der Ebene der Grundplatte 2 verläuft, gebildet. An mehreren Stellen sind Auflagezungen 4 zum Lagern des Trägers 1 in einem nicht dargestellten Gerätegehäuse an entsprechenden, dazu vorzusehenden Auflagen vorgesehen.

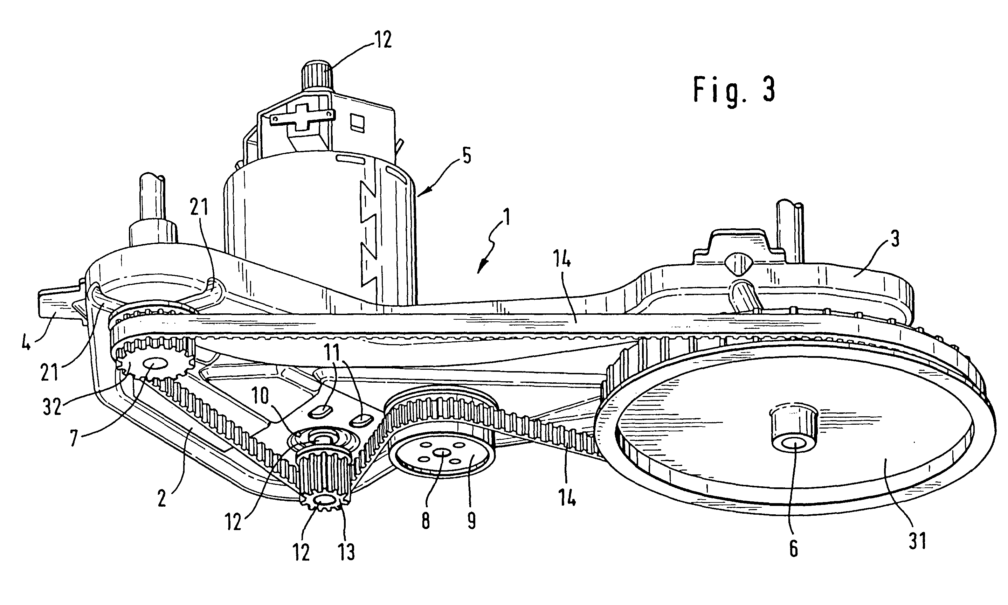

Der Träger, wie ihn die Figuren 1 und 3 zeigen, dient nach Fig. 3 zur Aufnahme eines elektrischen Antriebsmotors 5 mit Antriebswelle 12, einer ersten Antriebsspindel 6, einer zweiten Antriebsspindel 7 sowie einer Welle 8 für ein Spannrad 9. Die erste und zweite Antriebsspindel 6, 7 ist mit einer Riemenscheibe 31 bzw. 32 drehfest verbunden. Die Antriebsteile sind in ihrem an dem Träger 1 montierten Zustand in Fig. 3 dargestellt, die, im Gegensatz zu der Fig. 1, eine Ansicht des Trägers 1 von dessen Unterseite zeigt.

Für den elektrischen Antriebsmotor 5 ist eine Öffnung 10 in der Grundplatte 2 gebildet, die von drei Langlöchern 11 umgeben ist, durch die nicht näher dargestellte Befestigungsschrauben zum Montieren des Antriebsmotors 5 hindurchgeführt werden. Durch die Öffnung 10 erstreckt sich die Antriebswelle 12 des Antriebsmotors 5 frei hindurch, die ein Antriebsritzel 13 trägt (siehe Fig. 3), das, wie die Riemenscheiben 31, 32, in einen Antriebs-Keilriemen 14 eingreift. Um den Bereich der Grundplatte 2, der die Öffnung 10 umgibt und in dem die Langlöcher 11 zur Befestigung des Antriebsmotors 5 vorgesehen sind, auszusteifen, sind mehrere sickenförmige Versteifungsrippen 15 gleichmäßig von dem Rand der Öffnung 10 ausgehend verteilt, die den Flächenbereich um die Öffnung 10 herum aussteifen. Insgesamt sind hier fünf solcher sickenförmiger Versteifungsrippen 15 um die Öffnung 10 vorgesehen.

An seinen beiden Längsenden besitzt der Träger 1 eine erste Lagerhülse 16 sowie eine zweite Lagerhülse 17 jeweils. Die erste Lagerhülse 16 ist dazu vorgesehen, die erste Antriebsspindel 6 über eine in die Hülse einzusetzende Lagerbuchse 30 (Fig. 2) zu lagern, während die zweite Lagerhülse 17 dazu vorgesehen ist, die zweite Antriebsspindel 7, ebenfalls mittels einer entsprechenden, nicht näher dargestellten Lagerbuchse gleitend drehbar zu lagern.

Die Lagerhülse 16 der Fig. 1 ist im Schnitt in Fig. 2 dargestellt. Wie anhand der Fig. 2 zu erkennen ist, steht die erste Lagerhülse 16 über der Grundplatte 2 des Trägers 1 in Richtung der Achse 18 gesehen in einer Höhe 19, die etwa dem 2- bis 5-fachen Innendurchmesser 20 der ersten Lagerhülse 16 entspricht, vor, vorzugsweise ungefähr dem 3,2-fachen. Entsprechend diesem Verhältnis der ersten Lagerhülse 16 ist auch die zweite Lagerhülse 17 dimensioniert. Vorteilhafterweise beträgt der Innendurchmesser 20 der Lagerhülse 17 etwa 14 mm, die Höhe 20 mm, die darüber hinausragende tragende Länge der gesamten Lagerbuchse (nicht dargestellt) 27 mm und deren Innendurchmesser etwa 8 mm.

Wie die Fig. 1 zeigt, erstrecken sich mehrere Versteifungsrippen 21 radial von der Hülsenwand 22 nach außen. Während der ersten Lagerhülse 16 vier solcher Versteifungsrippen 21 zugeordnet sind, erstrecken sich von der zweiten, etwas kleineren Lagerhülse 17 nur drei solcher Versteifungsrippen 21 radial nach außen. Diese Versteifungsrippen 21 gehen, wie die Schnittdarstellung der Fig. 2 am Übergang 33 zeigt, in die Hülsenwand 22 jeweils über; sie enden in einer Höhe 23 oberhalb der Grundplatte 2, die etwa der doppelten Höhe 24 der Versteifungsrippen 21 entspricht (Fig. 2). Diese Anordnung reicht hier aus, um die Lagerhülsen ausreichend biegesteif zu machen. Die Querschnittshöhe 24 der Versteifungsrippen 21 beträgt hier etwa 5 mm.

Etwa in der Mitte des Trägers 1, in Fig. 1 unterhalb der Öffnung 10 für den elektrischen Antriebsmotor 5, steht eine weitere Lagerhülse 25 kleineren Durchmessers von der Grundplatte 2 vor, die zur Aufnahme der Welle 8 und einer entsprechenden Lagerbuchse (nicht dargestellt) für die Welle 8, die das in Fig. 3 gezeigte Spannrad 9 trägt, dient. Da auf ein solches Spannrad 9 nur geringe Kräfte ausgeübt werden, ist es nicht unbedingt erforderlich, besondere Versteifungsrippen, wie die Versteifungsrippen 21, von der Wand der weiteren Lagerhülse 25 ausgehend, vorzusehen. Um allerdings einen verhältnismäßig biegesteifen Übergang zwischen der Hülsenwand 26 und der Grundplatte 2 zu erreichen, d.h. einen Übergang mit einem bestimmten Radius, ist eine zu der Unterseite des Trägers 1 bzw. der Grundplatte 2 vorstehende Ringnut 27 ausgebildet. Diese weist nicht ganz die Biegesteifigkeit auf, wie sie durch die Versteifungsrippen 21 erreicht wird. Allerdings stellt bei im Durchmesser ziemlich kleinen Lagerbuchsen 25 eine derartige Ringnut 27 die beste Festigkeitserhöhung dar, da längsverlaufende Rippen den Traganteil einer Lagerbuchse verringern und daher eine Befestigung einer Lagerbuchse kaum noch erlauben.

Durch die in die erste und zweite Lagerhülse 16, 17 einstrahlenden Versteifungsrippen 21 wird die durch das Tiefziehverfahren sehr lange und dünnwandige Hülsenwand 22 ausgesteift. Um dem Träger 1 und insbesondere den Lagerhülsen 16 und 17 eine zusätzliche Steifigkeit zu verleihen, erstrecken sich also die von den Lagerhülsen 16, 17 radial ausgehenden Versteifungsrippen 21 bis zu dem Rand 3 des Trägers 1 und laufen in diesem Rand 3 aus, wie besonders deutlich in Fig. 1 anhand der vorderen Versteifungsrippe 21, die von der zweiten Lagerhülse 17 ausgeht, zu erkennen ist. Von unten her oder vom Rand betrachtet, bildet die Versteifungsrippe 21 eine Rille 34.

Die Grundplatte 2, wie sie die Figuren 1 und 3 zeigen, ist aus einem dünnen Metallblech mit einer Wandstärke im Bereich von etwa 0,8 mm bis 1,2 mm, vorzugsweise 1 mm, geformt, wenn sie für eine Haushaltsküchenmaschine mit einer Antriebsleistung des Antriebsmotors 5 von etwa 300 bis 500 Watt verwendet wird.

Um die Grundplatte 2 herzustellen, wie sie in der Fig. 1 gezeigt ist, werden nach dem Stanzvorgang zunächst die erste Lagerhülse 16, die zweite Lagerhülse 17 sowie die weitere Lagerhülse 25 in einem Verformungs- oder Tiefziehverfahren unter Verdünnung des plattenförmigen Metallblech-Rohlings, der für den Träger 1 verwendet wird, um die Lagerstellenbereiche ausgestülpt. Dabei wird der obere Rand der jeweiligen Hülse 16, 17 und 25 zu einer Wandstärke von einigen Zehntel Millimetern aufgebogen, bis die Lagerhülsen 16, 17, 25 an ihren Öffnungen 35, 36, 37 aufbrechen. Anschließend, auch bereits zuvor oder auch gleichzeitig mit dem Ausstülpvorgang, werden im Tiefziehverfahren oder durch Pressen die von der Grundplatte 2 nach unten vorstehenden, sickenförmigen Versteifungsrippen 15 sowie die Ringnut 27 ausgeformt. Gleichzeitig werden die zu der Oberseite der Grundplatte 2 vorstehenden Versteifungsrippen 21, die von den Lagerhülsen 16 und 17 ausgehen, sowie die weiteren Versteifungsrippen 28 ausgeformt. Im Rahmen des letzteren Verfahrensschritts können auch der umlaufende Rand 2 sowie die Auflagezungen 4 von der Grundplatte 2 abgewinkelt werden. Die Reihenfolge der Bildung der Versteifungsrippen 15, die im Gegensatz zu den Versteifungsrippen 21, 28 nach unten von dem Träger 1 vorstehen, kann auch umgekehrt werden.

Nachdem der Träger 1, wie ihn die Fig. 1 zeigt, gebildet ist, werden in die Lagerhülsen 16 und 17 nach Fig. 2 Lagerbuchsen 30 eingepreßt, in denen dann die Antriebsspindeln 6, 7 und die Welle 8, wie sie in der Fig. 3 gezeigt sind, gelagert werden. Anschließend werden der Antriebsmotor, Getriebe, die elektrische Verdrahtung, Dämpfungselemente an den Auflagezungen 4 und sonstige Bauteile am Träger 1 montiert, bis er als komplettes Bauteil in das Gehäuse einer Küchenmaschine einsetzbar ist.

Der so hergestellte Träger 1 stellt ein montagefreundliches, besonders kostengünstiges Bauteil dar, das darüber hinaus durch die Grundplatte 2 eine hohe Steifigkeit aufweist, um die bem Einsatz ini einer Küchenmaschine auftretenden Kräfte schadlos aufzunehmen.

Nach Fig. 1 ist noch die eine Seite einer Kabelschelle 38 in die Grundplatte 2 eingeformt, die zur Befestigung des Anschlußkabels (nicht dargestellt) dient. Weiterhin ist noch zur Erdung eine Kontaktfahne 39 in der Grundplatte 2 ausgeformt.

## Patentansprüche

1. Träger (1) für ein Antriebssystem eines elektrisch angetriebenen Haushaltgeräts, insbesondere einer Küchenmaschine, mit einer Grundplatte (2), die eine Halterung für einen Elektromotor und mindestens eine von der Grundplatte (2) vorstehende Lagerhülse (16; 17) für die Aufnahme einer Lagerbuchse (30) zur drehbaren Lagerung einer Antriebsspindel (6; 7) aufweist, wobei die Lagerhülse (16; 17) einstückig mit der Grundplatte (2) ausgebildet ist und im wesentlichen quer zu der Grundplatte (2) verläuft,
**dadurch gekennzeichnet,**
**daß** die Grundplatte (2) mindestens eine sickenförmige Versteifungsrippe (21) aufweist, daß die Versteifungsrippe (21) strahlenförmig zu mindestens einer Lagerhülse (16; 17) verläuft, und daß diese Versteifungsrippe (21) in die Hülsenwand (22) der Lagerhülse (16, 17) übergeht.

2. Träger nach Anspruch 1,
**dadurch gekennzeichnet,**
**daß** die sickenförmige Versteifungsrippe (21) über den Außenumfang der Lagerhülse (16, 17) vorsteht.

3. Träger nach Anspruch 1,
**dadurch gekennzeichnet,**
**daß** die sickenförmige Versteifungsrippe (21) über den Innenumfang der Lagerhülse (16, 17) vorsteht.

4. Träger nach Anspruch 1,
**dadurch gekennzeichnet,**
**daß** die Versteifungsrippe (21) in der Lagerhülse (16, 17) ausläuft.

5. Träger nach Anspruch 1,
**dadurch gekennzeichnet,**
**daß** die Versteifungsrippe (21) die Lagerhülse (16, 17) durchläuft.

6. Träger nach Anspruch 1,
**dadurch gekennzeichnet,**
**daß** die Versteifungsrippe (21) eine Erstreckung in Richtung der Achse (18) der Lagerhülse (16; 17) entlang der Hülsenwand (22) aufweist und daß sie in einer Höhe (23) über der Grundplatte (2) derart endet, die etwa der doppelten Höhe (24) der jeweiligen Rippe (21) entspricht.

7. Träger nach Anspruch 1,
**dadurch gekennzeichnet,**
**daß** die Grundplatte (2) einen zumindest teilweise umlaufenden Rand (3) aufweist, der auf der Versteifungsrippe (21) verlaufenden Seiste vorsteht, und wobei ein Teil der Rippe (21) in diesen Rand (3) ausläuft.

8. Träger nach Anspruch 1,
**dadurch gekennzeichnet,**
**daß** er aus Metall gebildet ist.

9. Träger nach Anspruch 8,
**dadurch gekennzeichnet,**
**daß** die Lagerhülse (16; 17; 25) durch Walzverformung gebildet ist.

10. Träger nach Anspruch 8,
**dadurch gekennzeichnet,**
**daß** die Rippe durch Tiefziehen gebildet ist.

11. Träger nach Anspruch 8,
**dadurch gekennzeichnet,**
**daß** die Rippe (15, 21, 28) in die Grundplatte (2) eingepreßt ist.

12. Träger nach Anspruch 1,
**dadurch gekennzeichnet,**
**daß** die Hülse (16; 17) über der Grundplatte (2) etwa um das 1- bis 2-fache, vorzugsweise um das 1,5-fache, des Hülsen-Innendurchmessers (20) vorsteht.

13. Träger nach Anspruch 1,
**dadurch gekennzeichnet,**
**daß** jeder Lagerhülse (16; 17) mindestens drei Versteifungsrippen (21) zugeordnet sind, die annähernd unter gleichen Abständen zueinander um den Umfang der jeweiligen Lagerhülse (16; 17) verteilt sind.

## Claims

1. Support member (1) for a driving system of an electrically driven household appliance, in particular a kitchen machine, with a base plate (2) including a mounting device for an electric motor and at least one bearing sleeve (16, 17) that projects from the base plate (2) and accommodates a bearing bush (30) for the rotatable mounting support of a driving spindle (6, 7), wherein the bearing sleeve (16, 17) is integrally designed with the base plate (2) and extends generally transversely to the base plate (2),
**characterized in that** the base plate (2) includes at least one bead-shaped reinforcing rib (21), **in that** the reinforcing rib (21) extends like a ray to at least one bearing sleeve (16, 17), and **in that** the said reinforcing rib (21) passes over into the sleeve wall (22) of the bearing sleeve (16, 17).

2. Support member as claimed in claim 1,
**characterized in that** the bead-shaped reinforcing rib (21) projects from the outside periphery of the bearing sleeve (16, 17).

3. Support member as claimed in claim 1,
**characterized in that** the bead-shaped reinforcing rib (21) projects from the inside periphery of the bearing sleeve (16, 17).

4. Support member as claimed in claim 1,
**characterized in that** the reinforcing rib (21) ends in the bearing sleeve (16, 17).

5. Support member as claimed in claim 1,
**characterized in that** the reinforcing rib (21) extends through the bearing sleeve (16, 17).

6. Support member as claimed in claim 1,
**characterized in that** the reinforcing rib (21) includes an extension in the direction of the axis (18) of the bearing sleeve (16, 17) along the sleeve wall (22), and **in that** it ends at a height (23) above the base plate (2) which roughly corresponds to twice the height (24) of the respective rib (21).

7. Support member as claimed in claim 1,
**characterized in that** the base plate (2) at least in part has a circumferential edge (3) which projects on the side of the reinforcing rib (21), and wherein part of the rib (21) ends in this edge (3).

8. Support member as claimed in claim 1,
**characterized in that** it is made of metal.

9. Support member as claimed in claim 8,
**characterized in that** the bearing sleeve (16, 17, 25) is made in a rolling process.

10. Support member as claimed in claim 8,
**characterized in that** the rib is made in a deepdrawing process.

11. Support member as claimed in claim 8,
**characterized in that** the rib (15, 21, 28) is press fitted into the base plate (2).

12. Support member as claimed in claim 1,
**characterized in that** the sleeve (16, 17) projects above the base plate (2) by roughly one to two times, preferably 1.5 times, the inside diameter (20) of the sleeve.

13. Support member as claimed in claim 1,
**characterized in that** associated with each bearing sleeve (16, 17) are at least three reinforcing ribs (21) which are distributed around the periphery of the respective bearing sleeve (16, 17) with roughly equal distances relative to each other.

## Revendications

1. Support (1) pour un système d'entraînement d'un appareil ménager mû électriquement, notamment d'un appareil de cuisine, comportant une plaque de base (2), qui comporte un dispositif de retenue pour un moteur électrique et au moins une douille de support (16; 17), qui fait saillie sur la plaque de base (2) et sert à loger un coussinet de palier (30) pour supporter avec possibilité de rotation une broche d'entraînement (6; 7), la douille de support (16; 17) étant réalisée d'un seul tenant avec la plaque de base (2) et s'étendant essentiellement transversalement par rapport à la plaque de base (2), **caractérisé en ce que** la plaque de base (2) comporte au moins une nervure de rigidification en forme de moulure (21), que la nervure de renforcement (21) s'étend selon un rayon par rapport à au moins une douille de support (16; 17) et que cette nervure de renforcement (21) se prolonge par la paroi (22) de la douille de support (16; 17).

2. Support selon la revendication 1, **caractérisé en ce que** la nervure de renforcement en forme de moulure (21) fait saillie sur la périphérie extérieure de la douille de support (16, 17).

3. Support selon la revendication 1, **caractérisé en ce que** la nervure de renforcement en forme de moulure (21) fait saillie sur la périphérie intérieure de la douille de support (16, 17).

4. Support selon la revendication 1, **caractérisé en ce que** la nervure de renforcement (21) se termine dans la douille de support (16, 17).

5. Support selon la revendication 1, **caractérisé en ce que** la nervure de renforcement (21) traverse la douille de support (16, 17).

6. Support selon la revendication 1, **caractérisé en ce que** la nervure de renforcement (21) possède une étendue dans la direction de l'axe (18) de la douille de support (16; 17) le long de la paroi (22) de la douille et qu'elle se termine à une hauteur (23) au-dessus de la plaque de base (2) de telle sorte que cette hauteur correspond approximativement au double de la hauteur (24) de la nervure respective (21).

7. Support selon la revendication 1, **caractérisé en ce que** la plaque de base (2) comporte un bord au moins en partie périphérique, qui fait saillie sur le côté s'étendant du côté de la nervure de renforcement (21), et dans lequel une partie de la nervure (21) se termine dans ce bord (3).

8. Support selon la revendication 1, **caractérisé en ce qu'**il est formé d'un métal.

9. Support selon la revendication 8, **caractérisé en ce que** la douille de support (16; 17; 25) est formée par une déformation par laminage.

10. Support selon la revendication 8, **caractérisé en ce que** la nervure est formée par emboutissage.

11. Support selon la revendication 8, **caractérisé en ce que** la nervure (15, 21, 28) est insérée à force dans la plaque de base (2).

12. Support selon la revendication 1, **caractérisé en ce que** la douille (16; 17) fait saillie au-dessus de la plaque de base (2) environ sur une hauteur comprise entre 1 et 2 fois et de préférence égale à 1,5 fois le diamètre intérieur (20) de la douille.

13. Support selon la revendication 1, **caractérisé en ce qu'**à chaque douille de support (16; 17) sont associées au moins trois nervures de renforcement (21), qui sont réparties approximativement à des distances réciproques identiques autour de la périphérie de la douille de support respective (16; 17).
